# EUROPEAN PATENT APPLICATION

(11) **EP 4 300 426 A1**
(43) Date of publication of application: **03.01.2024**
(21) Application number: 22181733.1
(22) Date of filing: 29.06.2022
(51) Int. Cl.: G06T 11/00

(54) **PROGRESSIVE COMPRESSION FOR ITERATIVE 3D RECONSTRUCTION IN THE CLOUD**

(71) Applicant: Koninklijke Philips N.V., 5656 AG Eindhoven (NL)
(72) Inventor: NETSCH, Thomas, Eindhoven (NL); SCHÄFER, Dirk, Eindhoven (NL); RENISCH, Steffen, 5656AG Eindhoven (NL)
(74) Representative: Philips Intellectual Property & Standards

(57) **Abstract**

A system (SYS-R) and related methods for reconstruction from projection imagery. The system comprises a receiver interface (IN) via which is receivable input data including plural frequency components at a given frequency level from plural frequency levels. The frequency components are previously obtained based on image analysis of plural projection images acquired by an imaging apparatus (IA). An order in which the frequency components are receivable is from lower to higher frequency levels. A reconstructor module (RECON) implements a reconstruction algorithm to reconstruct, based on the plural frequency components at the given frequency level, a version of a reconstructed image *(V).* The system (SYS-R) allows responsive reconstruction in particular when the projection components are received over a low bandwidth transmission channel.

## Description

### FIELD OF THE INVENTION

The invention relates to a system for providing projection imagery for reconstruction, to a system for reconstruction from projection imagery, to an arrangement including the said systems, to related methods, to a computer program element, and to a computer readable medium.

### BACKGROUND OF THE INVENTION

Cone beam or other CT (computed tomography) modalities are based on a medical imaging technique where preferably a large number of 2D (two-dimensional) projection images of the region of interest along different projections directions are acquired. Rotational acquisition equipment is oftentimes used. Typically, about 600 projection images are acquired for a C-arm CBCT scan in about 10 sec sweep time which can result in data size of several hundred MBs, or even more than 1 GB. The projection images can be used to reconstruct a 3D volumetric image which allows visualizing sectional imagery of the region of interest for example. Such reconstruction is a computational process, that can be quite demanding in terms of computational resources. The computations are based on tomographic reconstruction algorithms such as filtered back-projection, iterative reconstruction, algebraic reconstruction, etc. In a good many of cases, the reconstruction may be implemented on a dedicated piece of hardware, such as a workstation which may be coupled to a given CBCT or CT scanner.

In principle, the reconstruction can also be computed on a shared resource, for example, such as may be hosted in and by an information technology department of a hospital, or on a cloud computing platform such as provided by various vendors of on-demand computing resources or web-services. In such shared setups, the projection imagery must be streamed to the hosting computer, where a compute instance (comparable to the workstation) runs the reconstruction algorithm.

On occasion, streaming bandwidth is limited which can lead to unwanted latency until the reconstructed imagery is available for review (display) or analysis by medical users. Such latency may be more keenly felt in busy hospital environments or trauma rooms, etc, where quick image-based decisions are oftentimes called for.

### SUMMARY OF THE INVENTION

There may be a need to improve CBCT imaging, in particular responsiveness thereof.

An object of the present invention is achieved by the subject matter of the independent claims where further embodiments are incorporated in the dependent claims. It should be noted that the following described aspects of the invention in relation to the systems equally applies to the methods, the arrangement, to the computer program element and to the computer readable medium.

According to a first aspect of the invention there is provided a system for reconstruction from projection imagery, comprising:
a receiver interface via which is receivable, over a communication channel, input data including plural frequency components at a given frequency level from plural frequency levels, the said frequency components previously obtainable based on image analysis of plural projection images acquired by an imaging apparatus, wherein an order in which the frequency components are receivable is from lower to higher frequency levels;
a reconstructor module to implement a reconstruction algorithm configured to reconstruct, based on the plural frequency components at, or up to (and including), the given frequency level, a version of a reconstructed image.

Reconstruction may be based on some or all frequency components for one or more frequency levels received up to, and preferably including, the given frequency level. That is, an initial version of the reconstructed volume may be based only on the frequency components for a lowest level of the frequency levels, for example.

Subsequently, the reconstructed volume may be refined with higher frequency information over additional versions, as further frequency components are received at ever higher frequency level(s). Thus, in embodiments, the reconstructor module is configured to update the (initial) version into a follow-up version, based on new input data upon receipt of such new input data at the receiver interface, the new input data including at least one new frequency component at a further of the plural frequency levels, being a higher frequency level than the given frequency level.

In embodiments, operation of the reconstructor module is interleaved with receipt of such new input data. Thus, an initial version of the reconstructed image can be generated from lower level frequency components while in parallel new input data of higher level frequency components can already be received, for example.

In embodiments, the reconstructor module is configured to implement for reconstruction of the follow-up version the same or a different reconstruction algorithm. Thus, in some embodiments an order of application of different types of reconstruction algorithms can be adapted based on the of order frequency level. Thus, types of reconstruction algorithm more reliant on low frequency data may be used earlier in the processing chain than other reconstruction algorithm more reliant on high frequency data.

In embodiments, the system includes a visualizer configured to render a visualization of the version of the reconstructed image, the visualization transitioning from the version to the follow-up or further one or more versions as the new or subsequent input data is so received.

In embodiments, the system is arranged remotely from the imaging apparatus. Thus, for example, the input data is streamed from the imaging apparatus to a remote shared resource, such as a cloud computing service.

In embodiments, a given frequency component in a given set represents a compression level of the respective projection image from the plural projection images.

In embodiments, the reconstruction module is to implement a tomographic reconstruction algorithm.

In embodiments, the imaging apparatus is a medical imaging apparatus configured for multi-directional projection image acquisition.

In a second aspect there is provided a system for providing projection imagery for reconstruction, comprising:
an image analyzer configurable to analyze plural projection images acquirable by an imaging apparatus into respective sets of frequency components at varying frequencies levels in the respective sets,
a transmitter configurable to transmit, in order from lower to higher frequency level, plural frequency components across the sets at a given frequency level for reconstruction by a reconstructor module into a respective version of a reconstructed image.

In embodiments of the system as per the second aspect, the image analyzer includes a frequency decomposer configurable to decompose the plural projection images into base frequencies, and a filter module to define the various frequency levels based on the base frequencies.

In embodiments of the system as per the second aspect the frequency decomposer is implementable based on any one of: i) wavelet type transform, ii) Fourier transform, iii) Laplace transform, iv) Gaussian transform.

In embodiments of the system as per the second aspect, some or each set may be represented as a frequency pyramid.

In embodiments of the system as per the second aspect, the frequency components are in spatial domain or in frequency domain.

In embodiments of the system as per the second aspect, the said system is part of the, or a, imaging apparatus or is associated therewith. Thus, for example, from the projection images acquired by the imaging apparatus, input data is prepared and transmitted for reconstruction on a remote shared resource, such as a cloud computing service.

In a third aspect there is provided an arrangement including the system of any one of the above described aspect and a system of any one of the above described second aspect.

In a further aspect there is provided a method of reconstruction from projection imagery, comprising:
receiving input data including plural frequency components at a given frequency level from plural frequency levels, the said frequency components previously obtainable based on image analysis of plural projection images acquired by an imaging apparatus, wherein an order in which the frequency components are receivable is from lower to higher frequency levels;
reconstructing, based on the plural frequency components at, or up to, the given frequency level, a version of a reconstructed image.

In a further aspect there is provided a method of providing projection imagery for reconstruction, comprising:
analyzing plural projection images acquirable by an imaging apparatus into respective sets of frequency components at varying frequencies levels in the respective sets,
transmitting over a communication channel, and in (ascending) order from lower to higher frequency level, plural frequency components across the sets at a given frequency level for reconstruction by a reconstructor module into a respective version of a reconstructed image.

In embodiments, the methods of providing projection imagery and reconstructing the projection imagery as described herein are combined, whereby for example the analyzing and transmitting steps are carried out by a local hospital resource such as an imaging apparatus or workstation and the receiving and reconstructing steps are carried out on a remote share resource, such as a cloud computing service.

In a yet further aspect, there is provided a computer program element, which, when being executed by at least one processing unit/system, is adapted to cause the at least one processing unit/system to perform any one of the methods.

In a further aspect there is provided at least one computer readable medium having stored thereon the program element.

In certain examples, what is proposed herein is the use of (spatial) frequency decomposition methods such as wavelets or others. Optionally, compression algorithms may be used that could be lossy or lossless. Such decomposition methods are often used in the context of compression techniques, but dedicated compression methods are not necessarily required herein. Decomposition and filtering may be sufficient to achieve quicker reconstruction. Specifically, the decomposition is combined with transmission in a progressive fashion. Hence, after transmission of a first (low frequency) part of the projection data, the data so transmitted can already be used for reconstruction. Specifically, in the first phase of the (optionally compressed) data stream, only low frequency information (such as low pass or other) is being transmitted. Once more and more data packages are received in ascending frequency levels, the currently reconstructed version of the volume of interest is refined by the reconstructor in accounting for the higher frequency information as received later. However, it has been found that, surprisingly, a good deal of relevant clinical information is already well captured by the low frequency content alone. Thus, by early reconstruction and, preferably, visualization of content based on low(er) frequency data (without reliance on high frequency information), clinically relevant tomographic image data can be made available to the user quicker. The higher frequency information content can be added later, if required.

In certain examples, what is proposed herein is that transmission order of packages is rearranged based on frequency level, and not on the order of acquisition of the projection imagery. Instead of transmitting the data one projection image after the other in the order of their acquisition, first the frequency components (also referred to a "f-component") of lower or lowest frequency level (eg, the first part of a decomposition pyramid, such as wavelet-based or other) is transmitted as a package which represents low frequency (such as low pass) information of some or all projections, and this is followed by the next set of packages carrying mid pass information, and in the last transmission the high(est)-frequency-level information of some or all projections is transmitted. Transmission can be halted at any time for example if the user feels that higher frequency content is no longer required, and enough insight has been gained by user based on the lower frequency content thus far received and reconstructed. But this will depend on the medical task at hand, and in some, if not most cases, also the high(er) frequency information may be needed eventually.

The above-described frequency-level based transmission order (as opposed to an acquisition-order based transmission protocol) allows addressing latency of tomographic image availability in particular in low bandwidth settings. For example, when faced with low bandwidth communication channels, one would ordinarily need to await receipt of the last projection image before finishing the reconstruction. Hence, the low bandwidth increases the total time for reconstruction. Furthermore, subsequent iterative passes to further improve the 3D image quality, such as jitter and motion correction, must wait until a first pass 3D reconstruction is available. However, with the proposed system and method, reconstruction can commence earlier and at least the low-frequency based first version of the reconstructed image is available sooner.

With existing image compression techniques such as PNG, or JPEG2000, the latency problem can be addressed to some extent, but at the cost of faint, barely visible image details. Another drawback of such image compression algorithms is that the compressed data must be completely transmitted before it can be decompressed again which is not required in the proposed setup where reconstruction can commence based on the frequency component already received. Thus, complete transmission of all frequency components for the reconstruction to commence is not required with the proposed system and method.

The reconstructor may not necessarily (re-)start reconstruction for each and every new f-component/package received, although this may still be done in some embodiments. In other embodiments, the reconstructor may await until f-components at a certain minimum number of different f-levels are received, and reconstructor (re-)starts reconstruction only then for the first/next version of the reconstructed image. This may allow better balancing of CPU time versus IQ gained, as some iterative reconstruction algorithms are CPU intensive tasks at times.

As used herein, the term *"frequency component"* (sometimes abbreviated as "f-component" as indicated earlier) is preferably based on a harmonic analysis of any type (such as Fourier-based, Wavelet-based, Cosine transforms, etc) of the projection images. The harmonic analysis may be done by the image analyzer, and may include the said frequency decomposition into (base) (spatial) frequencies in frequency domain (f-domain), which may be filtered or otherwise split or defined into the frequency levels. Merely two such f-levels may be sufficient (conventionally referred to as "high" and "low"), but more than two such f-levels may are also envisaged, such as high, low and one or more intermediate levels, one intermediate level higher than the other in ascending order, but all in between the low and high level. Some or each f-level may include, or relate to, a single frequency, but mostly some or each f-level includes or relates to a respective, different group ("band") of frequencies, such as high (band), low (band), intermediate (band). If there are such bands, the "high" and "low", "intermediate" etc, may relate to a reference frequency of/in the respective band, such as the mid-frequency, minimal, maximal, etc. The filtered frequencies may be inverse-transformed from f-domain back into spatial domain. Thus, the f-component may be in spatial domain, and may thus be referred to herein as an f-component image, or simply a "component image", and it is in embodiments such images that are transmitted from transmitter to receiver and are reconstructable there into the various versions of the reconstructed volume in image domain. Alternatively, the inverse transform may be done at the receiver side, for example at least partly included in the reconstruction algorithm. In this case, *"f-component"* as used herein relates to data from which the f-component images or the volume is recoverable, such as respective filter coefficients or other data that allow definition of the f-levels. Thus, in this latter case of f-domain f-components, it is merely such filter coefficients that are transmitted as f-components by transmitter to the receiver for inverse transformation back into spatial domain at receiver side, prior to, or during, reconstruction. Thus, the term f-component relate more generally, as an object of spatial or f-domain, to a description of different levels of structural details in the acquired projection imagery. Different f-components may respectively relate to, such as describe, different portions of the spatial frequency spectrum of the projection imagery. Thus, the f-component may relate to high pass, low pass, high scale, low scale, or other IQ aspects, etc.

*"Transmitting in order of f-level"* may not necessarily imply a strict order, although such is indeed envisaged in preferred embodiments. Alternatively, "plateauing" is not excluded, where the next frequency component transmitted may relate to the same f-level as the one or more earlier transmitted frequency components, especially when f-components for different projection directions are transmitted in different packages. Generally, transmission starts with the lowest f-level components, but in some embodiments, this is not necessarily so. For example, transmission may start with the lowest f-level that is larger than an optional minimal f-level threshold. In other words, some f-level components may be skipped for whatever reason, either initially or later, so gaps in f-levels are not excluded herein.

A *"package"* as used herein relates to a set of f-components that are transmitted together.

*"Transmission*" of data as used herein includes streaming, and this is preferred. Data transmission may commence and/or continue whilst projection image acquisition is ongoing. Streaming is not a necessity herein as any other type of data transmission is also envisaged herein. Data transmission from the transmitter to the receiver may occur after data acquisition is complete and may occur at any time thereafter as may be called for by the (in particular medical) application at hand. However, it is in particular the time-saving benefits of the proposed systems and methods that may be best felt in real-time applications, such as in streaming or others.

### BRIEF DESCRIPTION OF THE DRAWINGS

Exemplary embodiments of the invention will now be described with reference to the following drawings, which are not to scale, wherein:
Figure 1 shows a schematic diagram of a tomographic imaging arrangement;
Figure 2 shows a block diagram of a system for facilitating accelerated reconstruction and/or visualization of reconstructed imagery;
Figure 3 shows a communication protocol for transmission of frequency components in the order of their frequency levels;
Figures 4 and 5 are timing diagrams that illustrate processing steps of the system in Figure 2;
Figure 6 shows a flow chart for a computer-implemented method of providing projection imagery, the method in support of accelerated reconstruction and/or visualization of reconstructed imagery; and
Figure 7 shows a flow chart for a computer-implemented -method of reconstruction of imagery from projection imagery, the method in support of accelerated reconstruction and/or visualization of the reconstructed imagery.

### DETAILED DESCRIPTION OF EMBODIMENTS

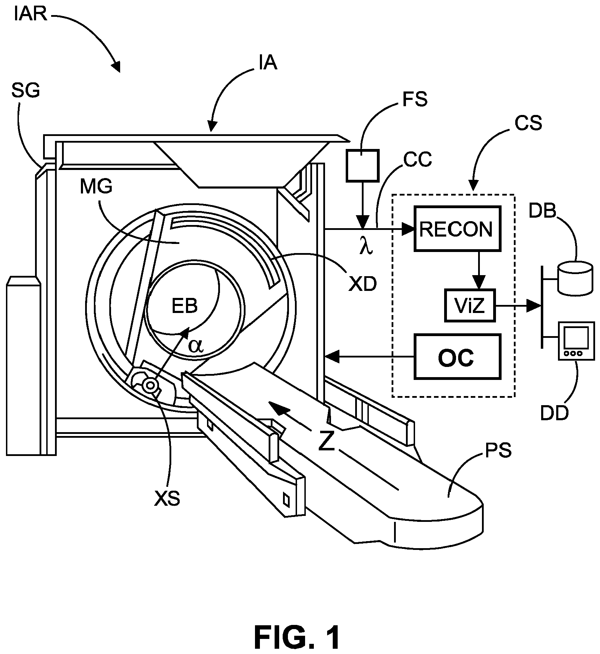

Reference is first made to Figure 1 which shows a schematic block diagram of a medical imaging arrangement IAR as envisaged herein in embodiments. The arrangement IAR may include a medical imaging apparatus IA, preferably of the tomographic X-ray based type, but other tomographic modalities such as MRI, PET and others still are not excluded herein.

The arrangement IAR further includes a computing system CS, preferably remotely located from the imaging apparatus. The computing system CS may be implemented as a Cloud solution, run on one or more servers. The imaging apparatus IA may be installed in a clinical facility, such as in a hospital for example. The imager IA may be communicatively coupled via a wired or wireless (or partly both) communication channel CC to computing system CS. The computing system allows for improved in particular rapid availability of tomographic reconstruction(s) of the projection imagery acquired by the imager IA as will be explored in more detail below.

The imaging apparatus IA is operable to generate, in particular acquire, projection data λ which are forwarded through the communication channel CC to the computing system CS for reconstruction into tomographic (sectional) images. The computing system CS runs one or more reconstructor units RECON, which implement one or plural reconstruction algorithms. In general, reconstruction algorithms implement a mapping that maps projection data λ located in projection domain into image domain. Image domain is a portion of 3D space and is located in the examination region ER of the imaging apparatus, whilst the projection domain is in 2D, and is located at an (X-ray) detector XD of the imaging apparatus IA.

As said, the imaging apparatus IA is preferably of the tomographic type, and is preferably configured for multi-directional projection image acquisition. The imaging apparatus IA is thus capable of acquiring projection images λ along different projection directions α relative to the examination region ER, and thus the anatomical region ("ROI") of interest of the patient. Acquisition be done in embodiments by a rotational system where at least the X-ray source XS is arranged in a moveable gantry MG. The movable gantry (and with it the X-ray source XS in embodiments) is rotatable in a stationary gantry SG around the examination region ER in which the patient/ROI resides during imaging. Opposite the X-ray source in the movable gantry there is the X-ray detector XD which may rotate with the gantry and X-ray source around the examination region ER to realize the different projection directions α. As schematically indicated in Figure 1, patient's longitudinal or imaging axis Z may extend into the examination region ER during imaging. Patient PAT may lie on a patient support PS, such as a bed, which is positioned at least partly in the examination region ER during imaging. In some, but not all embodiments, helical imaging protocols are envisaged herein where there is a relative lateral motion along the longitudinal axis Z between X-ray source XS and the patient PAT. For example, the patient support PS may be advanced through the examination region ER during the multi-directional projection image acquisition, for example during rotation of the X-ray source XS around the patient.

The CT scanner setup as illustrated in the Figure 1 is merely according to one embodiment, and other tomographic imaging equipment such as C-arm or U-arm scanners, Cone beam CT arrangements, mammographic imagers, etc, are not excluded herein. C-arm cone beam imager are preferred herein in some embodiments. In addition, the multi-directional acquisition capability may not necessarily result from a rotational system such as shown in Figure 1. Non-rotational imaging systems are also envisaged, such as in CT scanners of the fourth or higher generation, where multiple X-ray sources are arranged around the examination region in a source annulus for example. In addition or instead, the detector XD may be arranged as a detector annulus around the examination region. Thus, in such systems there is no rotation of the X-ray source XS or detector XD, or of both.

There may be an operator console OC through which a user, such as medical personnel, controls imaging operation. For example, user may request initiating the image acquisition or may request reconstruction or other operations, or may initiate transmission of data to the computing system CS, or may halt such transmission as required.

During imaging, an X-ray beam XB issues forth, along the different projection directions α, from a focal spot of the X-ray source(s) XS. The beam XB passes through the examination region with the patient in it. The x-radiation interacts with patient tissue. The X-ray beam XB is modified as a result of this interaction. In general, such X-ray beam XB modification includes attenuation and scattering of the original incoming X-ray beam. The modified X-radiation is then detected as a spatial distribution of various intensities at X-ray sensitive pixels of the detector XD.

It is not necessary herein to acquire projection images λ over a full 360° angular range around the examination region ER. Acquisition over a partial angular range such as a range of 270°, 180°, or even less may be sufficient. The X-ray detector is preferably configured for acquisition of 2D projection images with rows and columns of intensity values as registered by the detector pixels. That is, the detector pixels themselves may be arranged in a matrix layout. Such a 2D layout may be used in divergent imaging geometries, such as cone or fan beam or others. However, one dimensional detector pixel layouts (such as along a single line) are not excluded herein, and neither are parallel beam geometries.

The reconstructor RECON implements one or more reconstruction algorithms to process the projection imagery. Specifically, the reconstructor RECON may compute sectional image V of the examination region (with the patient in it) for diagnostic, therapeutic or other purposes. The reconstructor RECON may be able to produce sectional volumetric image data ("image volume(s)") V. However, this does not exclude producing a single image slice in the examination region as required. Thus, the reconstructed imagery may be denoted herein as *V* which may include the whole volume, a partial volume or a specific section therethrough. Volumetric reconstruction may be facilitated by the helical movement and/or the 2D layout of the X-ray detector XD.

The reconstructed volumetric imagery *V* may be visualized by a visualizer VIZ. The visualizer VIZ may generate a graphics display of the volume or a given slice. The graphics display may be displayed on a display device DD. The visualizer VIZ may map a section of image volume V, or the image volume V as a whole, onto a grey value or a color palette. The visualizer VIZ may control, via suitable interfaces, video circuitry to effect display of the graphics display on the display device DD. In addition or instead of so displaying, the reconstructed imagery V may be stored in a memory for later review or for other types of processing. Such a memory may include an image repository, such as a database (eg, PACS), or other (preferably) non-volatile data storage arrangement.

The reconstructed volume imagery V may be manipulated, for example by reformatting, to define cross-sectional planes that are different from the sectional plane defined by the imaging geometry. Such reformatting may allow medical user to better discern tissue type or anatomic details of the internals of the patient, in dependence on the medical purpose at hand, such as for diagnosis or preparation for some type of treatment, etc.

Broadly, the medical imaging arrangement IAR may include a facilitator system FS that facilitates the reconstruction and/or visualization of the reconstructed imagery. More specifically, the facilitator system FS allows accelerated visualization and/or reconstruction of the tomographic imagery V.

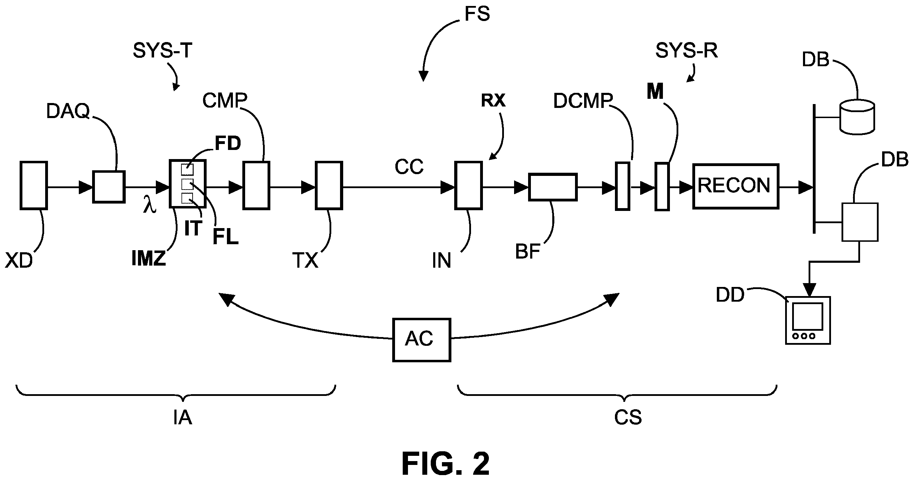

Details of facilitator system FS are shown in the block diagram of Figure 2, to which reference is now made. The facilitator system FS may include an accelerator component AC that is configured to accelerate in particular the reconstruction of a given volume V and, optionally, visualization thereof. The accelerator component AC may act on or in a network SYS-T, SYS-R. Specifically, the accelerator component AC may act on a projection data generator side (also referred to as the transmitter side SYS-T), for example at the imaging apparatus, and, optionally, also at the receiving side SYS-R (including the computing system CS) where the reconstruction takes place by way of reconstructor RECON. The transmitter side SYS-T may include herein the imager IA, but may also include a computing system (other than the one on which the reconstruction algorithm runs) that implements at least parts of the facilitator system FS, in particular parts of the accelerator AC. The accelerator component AC may be implemented as a signal processing device or system acting on either side of a communication channel CC between the two sides of the network SYS-T. SYS-R, in particular between imaging apparatus IA and reconstructor RECON. Alternatively, the accelerator component AC may be implemented by plural components on both sides of communication channel CC. Thus, the facilitator system FS, and in particular its accelerator AC, may itself be a distributed entity, distributed across both sides of the network CC, SYS-T, SYS-R. Generally, the communication channel CC communicatively couples the two sides SYS-T, SYS-R of the network, The two network sides are preferably remote from each SYS-T, SYS-R, such as located in different rooms, or in different building, or may be geographically apart, but this is not an absolute requirement herein, although the time saving benefits afforded herein will most likely be felt in such a remote arrangements where communication latency can be expected at times.

The communication channel CC may be a wired or wireless communication network, or may include both, wired and wireless parts. Communication, in particular data transfer, over channel CC may be based on any suitable communication protocol, such as packet based or other. In embodiments, the communication channel CC is or incudes an internet connection. Thus, protocols envisaged may include TCP IP. Protocols may include in addition WIFI (or other EEE 802.11 based communication setups), Bluetooth, or others still.

On the transmitter side SYS-T, the accelerator component AC may implement a higher layer protocol which is operative to rearrange an order of certain data of the acquired projection imagery, referred to herein as frequency components, and to effect sending the rearranged frequency components of the projection imagery to the receiver side SYS-R. The receiver side SYS-R may include the computing system CS, in particular the reconstructor RECON. The rearranged order is in general different from the order in which the projection imagery was/is acquired by the imaging apparatus IA, the latter being a function of projection direction α. In distinction from a projection-direction-based dependence, the order in which acceleration controller AC causes frequency components to be sent across channel CC is a function of the spatial frequency content as captured in the projection imagery. Specifically, and as will be explained in more detail below, the said frequency components may relate to certain information portions of the projection imagery. More specifically still, information portions of low(er) frequency are sent first, followed by information portions of higher spatial frequencies, and so on. The said information portions will be referred to herein in some embodiments as frequency component images c, or simply as component images c. Their respective frequency level may be referred to herein as the "f-level", representing where the component includes (predominantly) higher or lower frequency information. The frequency component images may be obtained based on frequency decomposition. and are preferably sent in packages in the order of ascending frequency levels, proceeding from the lowest to the highest frequency levels. This will be explained in more detail below. In general, any reference herein to *"frequency"* is one of spatial frequency to describe structure/image information at different level of detail as captured in a given projection image or in multiple (such as all) projection images.

In yet more detail, an image analyzer IMZ of the transmitter side SYS-T may be used that includes a frequency decomposer FD and a frequency filter FL. At least part(s) of the analyzer IMZ may be part of the transmitter side SYS-T, such as may be integrated into the imager, its operating console or other, such as in the above-mentioned computing system associated with the imager, etc.

Generally, the frequency decomposer FD may implement a harmonic analysis of the projection imagery per projection direction into frequencies in f-domain. The filter FL then splits the frequencies into groups or bands of frequencies for some or each projection direction. Such frequency bands of regions in f-domain may be described by a respective group of base functions and/or filter coefficients. An inverse transformer IT transforms the respective frequency bands back into spatial domain to so obtain the frequency components, which may be referred to as frequency component images (f-component images) as noted above. In embodiments, the inverse transformer IT may operate on the transmitter side SYS-T (eg, as part of analyzer IMZ), to facilitate transmitting such f-component images in the order of their ascending f-levels as mentioned above, and main reference will be made to such embodiments in the following. However, alternative embodiments (to be described further below) are also envisaged herein, in which the inverse transformer IT operates on the receiver side SYS-R, and it is the mentioned filter/frequency coefficients for the f-levels (and not images) that are transmitted by transmitter side SYS-T in the order of ascending f-levels to the receiver side SYS-R.

The frequency decomposer FD may be implemented as a wavelet-transform, Fourier-based transform, Laplacian transform, Gaussian transform, or any other suitable signal processing algorithm that is capable of decomposing some or each of the initially acquired projection images into respective spatial frequency component images c with varying spatial frequency level ω. The frequency level ω refers to the pre-dominant spatial frequency encoded in the respective component image *c_{ω}.* The frequency level ω may depend on the decomposer algorithm used. Thus, the frequency level ω may refer to respective frequency band as mentioned, or may instead refer to a respective frequency threshold to define a region or interval in f-domain. Thus, the frequency level ω may be confined in a given f-level to a band of frequencies , or may include all frequencies up to the respective frequency threshold. In a simple embodiment, a low pass filter FL is applied by decomposer FD iteratively to a given projection image to obtain a respective sequence of low pass filtered images. Starting from a given projection image, a low pass filtered version is obtained by filter FL, and this version may then be low pass filtered again, and to on, to so obtain a respective set of frequency component images at different frequency levels for some or each given projection image, as acquired. The low-pass filtering may include smoothing and/or down-sampling, convolution operations, etc, or may be implemented by any other suitable image operation(s) that affect the spatial frequency spectrum. The decomposer FD thus defines for a given projection image/projection direction, a hierarchy of its component images, including a component image with lowest frequencies, a component image with highest frequencies, and optionally one or more component images with intermediate frequencies in their order of frequencies. Such hierarchy may be conceptualized, represented, processed or stored as a pyramid (structure). As an example, frequency decomposer FD may operate in the context of a Wavelet based compression algorithm, to compute a respective pyramid per projection image. The pyramid computation in terms of wavelets is, although preferred, merely one example, and may be done instead in the context of Gaussian or Laplacian pyramids, or in the context of pyramids for any one other harmonic analysis setup. The pyramid approach is not necessarily tied to a dedicated compression scheme and may be used on its own herein.

Accelerator controller AC instructs transmitter TX to send component images of the acquired projection images in the order of their (ascending) frequencies levels across channel CC to be received at input interface IN of receiver RX of computational system CS as the receiver side SYS-R.

Optionally, there may be an image compressor component CMP that applies a compression algorithm to the frequency component images to obtain a compressed version of the component images, and thus of the initial projection image as a whole. It is the so compressed component images which are then sent by transmitter TX through the communication channel CC to the input interface IN of receiver RX of the computational system CS. If a compressor CMP is used at the transmitter side SYS-T, a counterpart decompression algorithm DCMP may be arranged at the receiving side SYS-T for decompression. However, use of such a compression/-decompression algorithm is not necessarily required herein in all embodiments, as the transmission of the low frequency component images can already be done faster and/or at lower band rate as compared to sending over the original projection images and this may be sufficient for present purposes of rapid visualization of merely the low(er) frequency information as will explained in more detail below. Having said that, whilst specific compression/decompression algorithm are not required herein over and above the image analyzer IMZ, in embodiments, the above-mentioned decomposer FD and filter FL of analyzer IMZ may still operate in the context of such a compression/decompression algorithm. But again, such dedicated compression/decompression algorithms (which may include, for example, coding/decoding schemes, etc) is not necessarily required herein.

With continued reference to Figure 2, a buffer BF may be used at the receiving side SYS-R to store the transmitted component images. The component images may be optionally stored in the order as received, to facilitate the processing by reconstructor RECON of the f-component images in the order of ascending f-levels. Briefly, what is proposed herein in embodiments, is to send via the channel CC the low frequency components images, in particular those of lowest frequency, first, as this can save bandwidth over sending across the original projection imagery. Accelerator controller AC is to instruct the reconstructor RECON to start reconstructing, based first only on the available low/lowest frequency components images. A first version of the ultimate sectional image may be so obtained quicker than when first awaiting all frequency information and only then starting to reconstruct. The first version may then be dynamically refined over follow-up one or more versions, once higher frequency component images at higher f-levels are received.

Thus, as envisaged herein, the reconstructor RECON may already operate to reconstruct first the low frequency component images received by receiver RX from the transmitter side SYS-T. Thus, without awaiting receipt of the higher frequency component images, the reconstructor RECON uses the already available low level frequency component images to commence the reconstruction, based, at first, on only the received low frequency component images, to derive the said first version of the reconstructed volume. Then, later, the first version may then be consecutively refined into subsequent one or more follow-up versions (second, third, etc.) as the higher-level frequency component images are received at higher f-levels. Thus, the additional higher frequency component images are accounted for in the ongoing reconstruction process, to refine the reconstruction. Thus, a seamless refinement is envisaged. Alternatively, reconstruction based on component images at the current level of reconstruction is allowed to complete first, and the so obtained version is used as an initial image for a next reconstruction cycle or pass, now using in addition to the component images at the previous f-level, the newly received component images at the higher f-level, and so on. The newly received component images are merged according to their respective projection direction with the respective component images at the earlier *f-*level already received for the respective projection direction. Such merging, implemented by a merger module M, may be by addition or by any other combination step. For example, such a combination operation may be based on an iterative procedure with taking differences, or other algebraic operations, such as in pyramidal schemes mentioned above. Thus, the combination operation may depend on the type of frequency decomposer FD used. The combination operation may be at least partly implemented by the inverse transformer IT, in particular in embodiments where the f-component are sent across in f-domain. In any one of such embodiments, the merger M operates to that the current set of projection images at given f-level are refined to encode ever finer structural details, and the current reconstructed image version V is thus also refined as its reconstruction is now based on the so refined projection images. Thus, with merger M, the current "pool" of available component images at the receiving side SYS-R is updated per projection direction to obtain over time refined projection imagery including progressively higher frequency detail, until the original projection images are restored at the receiving side. Thus, the reconstructed volume is refined in the various passes of the reconstructor RECON because the quality (resolution) of the IQ in projection domain is improved, as the higher frequency component images are received and merged with the component images already available at the receiver side SY-R.

In addition, the controller AC may forward a current version of the reconstructed image, such the first or any given full-up version, on to the visualizer VIZ for visualization, whilst reconstruction of the next version based on newly received component images at a higher f-level is still ongoing. Because the reconstructor RECON is taking into account in a follow up pass the higher-level frequency component images as received at the input port IN, the current version, such as the first version of the reconstructed image, is gradually and dynamically refined. Thus, the reconstructor processes increasingly more component images at increasing f-levels, so that the reconstructed image progresses through a number of follow-up versions. This number may correspond to the number of frequency levels into which the initial projection images have been decomposed into by decomposer FD.

The visualizer VIZ may use phase-in technology to gradually transition from one version to the next, thus providing the medical user with a visual impression of the reconstructed imagery gradually morphing from an initial version (reconstructed based on low frequency information) via one or more intermediate version, into the final version. In the final version, eventually, all component images are accounted for in the reconstruction process across all frequency levels. Alternatively, the visualization is updated in steps rather than by gradual morphing. It will be understood, that thanks to the progressive processing as proposed herein, medically relevant image information is revealable earlier as compared to previous approaches where all projection imagery had to be transferred first in the order of acquisition, and reconstruction only commenced then. It has been observed herein that in some instances the lower frequency component images carry already sufficient image information for the medical user to obtain a good enough diagnostic or therapeutic understanding. The higher frequency components may add more details, but the low frequency information may be sufficient for the task at hand. It may thus not be necessary to delay further medical steps until all frequency levels have been accounted for in the reconstruction. Thus, an accelerated reconstruction scheme is contemplated herein, which has a knock-one effect of also accelerating down-stream medical workflows.

Sending across the frequency component images after frequency decomposition in the order of their frequency levels, starting with the low frequency components and progressing to the high frequency levels (possibly through a number of intermediate frequencies levels) is one mode of acceleration as afforded herein. Another mode of acceleration may result by having the reconstructor commence reconstruction after receipt of merely some, such a one single component image, at a given frequency level. It is not necessary to await all component images at a given frequency level before commencing with the reconstruction. Additional component images for the given level can be added later on as they are received in multiple packages for example. However, receipt of all frequency components at a given level in one single package is also envisaged herein.

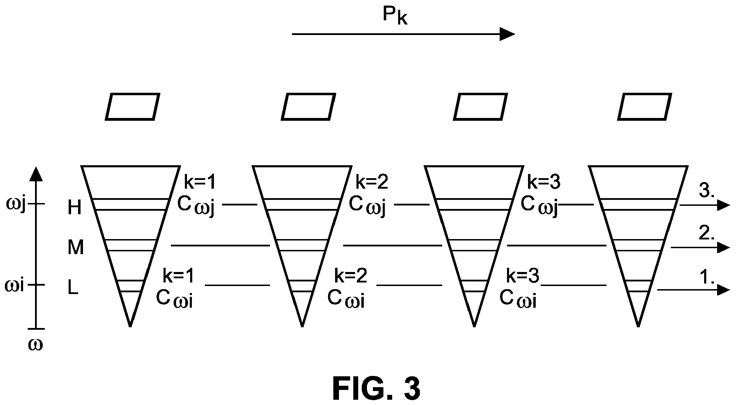

The frequency decomposition-based data communication protocol as administered by the acceleration controller AC is illustrated in the schematic drawing of Figure 3. The top portion of Figure 3 shows projection images *Pₖ,* where index *k* indicates respective (different) projection directions, although there may be more than one projection image per projection direction. The projection direction for a given projection image is defined by the position of the focal spot relative to the imaged patient.

Each projection image for a given projection direction is decomposed into respective set of frequency component images *c_{ω}.* In Figure 3, three levels are shown, low *(L),* medium *(M)* and high (*H*), but there may be just two levels, low and high, or there may be more than three levels with low and high levels, and more than one intermediate f-levels M. Thus, operation of frequency decomposer FD for each projection direction results in a respective set of such frequency component images c_{ω} which may be visualized in a pyramidical fashion such as indicated by inverted triangles in Figure 3. For example, in some cases, the frequency decomposition may be done by iterative low-pass filtering which may include down-sampling at each level, thereby decreasing the image size as indicated by the tapering of the pyramid representation. The component images in at the various levels may also be denoted herein as *c_{L}, c_{M}, c_{H}* for simplicity. However, the decomposition techniques used herein are not tied to pyramidal processing, with Figure 3 merely serving as an illustration of decomposer's output in some embodiments.

As can be seen from the ordinal numbering "1.-3." as illustrated in Figure 3, the image part from the plural images *Pₖ* that is transmitted first (1.) according to the protocol as envisaged herein includes only the lowest frequency component images. Next, (2.), the component images at the intermediate level(s) M are transmitted, and then (3.) the component images at the higher/highest level are transmitted last. Again, there may be more than one intermediate level in which case the lowest intermediate level is transmitted first and then, in ascending sequence according to frequency level, the remaining component images at gradually increasing spatial frequency are transmitted for reconstruction. Each horizontal line in Figure 3 (indicated as 1., 2. and 3.) represents a respective package of component images at different (in this example case, 3) *f*-levels.

The projection direction *k* may be encoded as metadata and may be transmitted alongside each component image so that the reconstructor can attribute the information accordingly in image domain.

At the receiver side SYS-R, the controller AC may coordinate using multiple reconstruction algorithms, the order of which can be adapted based on the different f-levels of the frequency component images. This is because it has been observed that some reconstruction algorithms take mainly advantage of low frequency information, while others of higher frequency information. Thus, the reconstruction algorithms reliant more on low frequency components can be applied first and then later the reconstruction algorithm can be changed over to those that are more reliant on higher frequency component information. However, such switching between types of reconstruction algorithms as a function of the f-level of the current package of component images is optional. Thus, in some embodiments a single type of reconstruction algorithm is used throughout.

As a refinement to the above described f-level based ordering and transmission scheme, within the set of a given f-level, the component images may also be ordered according to their predominant frequency content, and the components are provided for reconstruction in this order. Whilst each component image may have for example a frequency spectrum that corresponds to the current f-level, the frequency spectrum for each component image in the given level may still vary in the set of component images for that f-level. This additional "micro-ordering" within an f-level as proposed herein may allow yet further decreasing visualization latency. However, this micro-ordering within *f*-levels is an option only, and in alternative embodiments the order in which the component images of given f-level set are sent over the channel CC to the reconstructor RECON is random.

As yet a further latency reduction mode, it is not necessary for all component images for all projection directions at a given f-level to be sent in one single package. Instead, there may be multiple such sets/packages being transmitted by transmitter TX over channel CC for a given f-level. Thus, it may be sufficient for component images for some subset of projection direction to be send over, and to then start/refine the reconstruction. For example, initially component images are sent over channel CC for every other projection direction, or for or every other *n (n>2)* more generally. Any other regular, or for that matter irregular, such omission scheme may be used to yet further improve transmission rates. Thus, an angular-sampling, on top of the proposed f-level based transmission sequence protocol may be used for yet better transmission rates. The f-components missing projection directions may be transmitted later or may not be required, depending on user's satisfaction with image quality of version of volume V.

Reconstruction algorithms as used herein by reconstructor RECON are preferably of the iterative type. That is, based on a given set of projection data (eg, components images *c_{ω}*), the reconstruction algorithms proceeds in iterative fashion by populating voxel grids of the image domain with image values. The image values are then adapted based on backward projection and optionally on forward projection, as required. Thus, the reconstruction algorithms as envisaged in some embodiments may thus use such a back projection operation which maps from projection domain back into image domain, whilst forward projection is the reverse operation as it maps from image domain into projection domain.

For example, some tomographic reconstruction algorithms envisaged herein can be formulated as an iterative procedure for improving an objective function. Specifically, the procedure may be formulated in terms of optimization, in particular minimization, of a cost function. The cost function measures how well the estimated imagery in image domain provided during the iterations matches the actually available input data, in this case f-component images. The currently reconstructed imagery is forward-projected into the projection domain. The forward projection is compared the available f-component images at the available f-levels. A deviation (if any) between available f-component images and the forward projection can be quantified by the cost function. In the iterations the imagery in image domain is adapted based on back-projection to reduce the cost function, the algorithm thus converging towards the final reconstructed image volume. A dual formulation of the above described optimization is also contemplated which includes a maximization of a utility function. Some iterative reconstruction algorithms use in addition a back-projection operation. Specifically, an iteration step may include the forward projection and back-projection operation. A current volume is forward projected, and compared to the available f-component images. Based on this difference, some modifications, e.g. to the back-projection geometry, is done, based on improving the objective function, such as minimizing according to some criteria, the cost-function. The back-projection step is then executed accounting for the change, and a new volume is obtained. Stopping criteria may be chosen according to the number of iterations, or quality criteria evaluated either in image domain, or in projection domain.

Thus, iterative constructions proceed in a number of iterations from an initial image in domain (which may be arbitrary or random) through a series of intermediate images in image domain to the final image. Reconstruction may be said herein to proceed in multiple "passes" as mentioned above. A pass is the application of a given reconstruction algorithm type, for example for a given set of component images, and is allowed to run for a number of iterations until convergence for example, or until any other criterion is fulfilled. Newly received component images for the same of a higher f-level may be "injected" into the reconstruction pass at any time, and merged with the current set of components images to refine the reconstructed volume *V.* Such merging may occur on receipt of new f-component data, thus the reconstruction process is interleaved with such merging events. Alternatively, a current reconstruction pass is left undisturbed, and merging by merger M occurs on user request or based on any other event, such as when the current reconstruction pass terminates or when component images for a certain minimal number of f-levels have accumulated in the buffer BF, etc.

In some embodiments, a pool of component images at the receiving side SYS-R on which the reconstruction is based may be enlarged as new component images are received at ascending f-levels. Reconstruction operation is started first based on only the low frequency components (L). Then, additional component images at increasing frequencies are added to the pool and may be merged M with the current component images in the pool, as per projection direction. The reconstruction algorithm may use the final version of the reconstructed image from the previous frequency level as an initial image for the pass when additionally processing the component images at the next frequency level. Once the component images of the last frequency level (H) are received, the last pass of reconstruction commences to obtain the final version of the image.

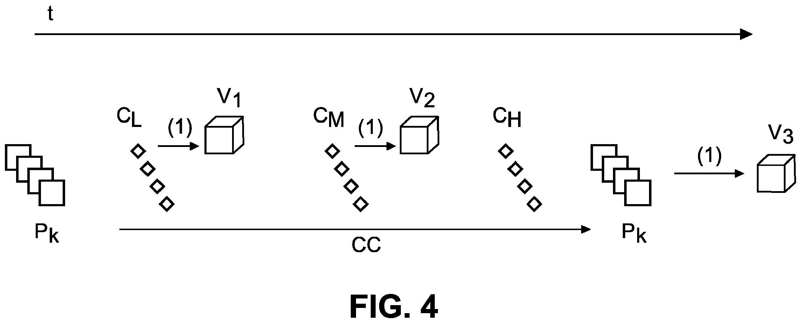

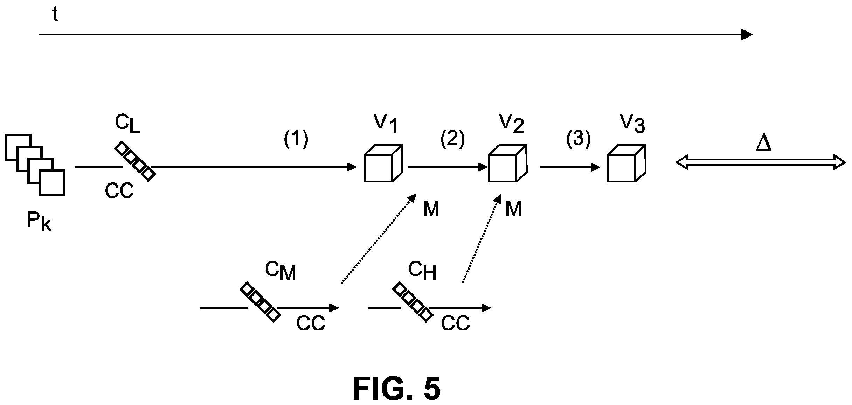

Figures 4 and 5 include timing diagrams where the above sequence of processing steps is represented for illustration of time savings (indicted as "Δ" in Figure 5) over conventional protocols with optional compression and optional subsequent decompression prior to commencing of reconstruction. In Figures 4,5, the respective series of staggered diamond symbols represent the *f*-component images for a given frequency level. 3 levels are shown, but there may be less (two), or more than 3 f-levels.

Referring first to Figure 4, this illustrates operation of controller AC, using pyramid type decomposition as an illustrative example only. After some or each transmission (and optional subsequent decompression), a volume V can always be reconstructed. Projection images, or optionally compressed projection images, are no longer transmitted one-by-one, but instead for some of all projections, only the low frequency component images, such as the first parts of the decomposition-pyramid, are transmitted first. In the next transmission round, the next layer of the pyramid of all projections (mid) are transmitted, and so on , until all data is transmitted (with highest f-level components transmitted last). A Wavelet-based compression algorithms may be used as an example.

As illustrated in Figure 4, at the receiver side, such as cloud system CS, the first back-projection operation of reconstructor RECON can be carried out once some (preferably, but necessarily, all) low frequency component images have been received. The so obtained first version reconstruction V, for now based on low frequency information only, can then be refined based on next higher frequency component images from the next data layer(s) of the pyramid (first mid level(s) M, and then high level H) once received at receiver RX. This means, that after the first version of the reconstructed volume (which is only based on the low frequency component image), the next pass reconstruction operation can already use as an initial image the first version low-resolution 3D image *V* so far reconstructed based on the low frequency component image. There is no need for idle time until the remaining data is received at the computing system that that implements the reconstructor REOCON. This allows accelerated early visualization, even when bandwidth over channel CC is limited.

As illustrated in Figure 5, the latency until the first reconstructed version of 3D image V is available is much reduced as compared to protocols that transmitted the projection images each as a whole, even when compressed, in the order of acquisition.

With the proposed system, as soon as more detailed higher frequency data arrives, the pool of f-components is changed, such by enlargement or merger, and more details appear in the reconstructed versions of the volume on the next passes (2) and (3) for example, with (1) indicating first pass (only one pass (1) is used in Figure 4). As a result, due to the proposed frequency level based "reordering" of the component images as per their f-levels, transmission latency ("transmission waiting time") can already be put to good use by the compute resource CS by processing merely the lower frequency data already available at the receiver side SYS-R.

A further time saving benefit with better IQ arises when the order of application of different types of reconstruction algorithms in different passes are adapted to the order of the f-levels of the received component images. For example, a table scatter correction pass (1) already works with low pass data of the wavelet pyramid, or otherwise obtained low-f component, such as a low-resolution image. The jitter removal pass (2) relies in general on finer details and should be controller by accelerator AC to run later, when more finer details appear in the current image (obtained in an earlier pass), due to the integration of further higher frequency component images. Also motion compensation pass (3) may benefit from the re-ordering of the passes. Usually 5 to 10 such passes (3) may be needed for motion-compensation, but coarse motion artifacts can already be handled based on low frequency information available in the early passes.

In addition, at least in the early stages, fewer number of projections may be used which results in memory and/or CPU time savings. In the later passes of reconstructions, finer detail is available and allows fine-tuning, for example the motion-compensation process.

As illustrated in Figure 5, in the case of low transmission bandwidth a re-arrangement of the subsequent passes and the incremental inclusion into later passes of higher frequency data can significantly improve the overall processing time. In Figure 4 illustrates an application where only a single pass (1) was used based on a single type of reconstruction algorithm. In Figure 5, three passes (1)-(3) are used for three different types of reconstruction algorithms as mentioned. Thus, the indicted order (1)-(3) of applying the respective types of reconstruction algorithms may differ from case to, and may differ from application orders previously used.

Whilst Figure 5 illustrates a decompression stage, this is optional as explained earlier as a mere decomposition and filtering into frequency component (images or coefficients) is sufficient herein to practice the proposed system.

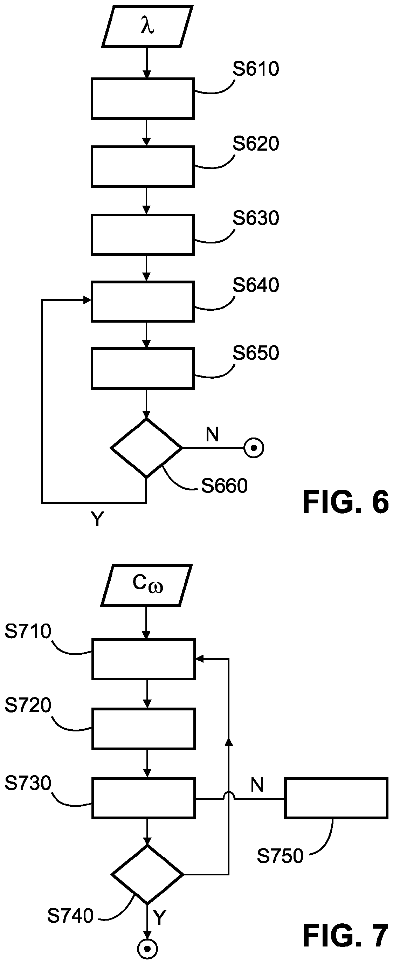

Reference is now made to the flow charts of Figures 6 and 7 where methods for accelerated reconstruction from projection imagery and/or accelerated visualization of reconstructed imagery is described, with the understanding that the below described steps are not necessarily tied to the system described above.

Referring first in more detail to Figure 6, this may be taken to relate to the transmitter or projection imagery generator side SYS-T.

As step S610, generated/acquired projection images are received.

At step S620 the projection images are analyzed into respective sets of frequency component at different frequency levels. There is at least one such set for each projection image. The analyzing S620 may include frequency decomposition, filtering and optionally an inverse transforming into spatial domain. Thus, the obtained f-components may be referred to herein as f-component images, although in alternative embodiments (mentioned above and below) the f-component is in f-domain. For now, spatial level representation is assumed, so we will be referred to f-component images in the following.

At step S640 some or all component images at a given frequency level, starting with preferably the lowest such level, are selected and forwarded/transmitted at step S650 to a receiver for reconstruction. A thresholding may be used in some instances very low levels may be skipped and transmission starts with the lowest level that passes the threshold.

The above step S640 is repeated for each frequency level across the sets of component images for each projection direction. That is, if it is ascertained at step S660 that the current component frequency level is not the last one, but there are one or more higher f-levels, then step S640 is repeated as described above by selecting the component images for the higher level and sending those component images across for reconstruction, and so forth.

If all frequency levels have been exhausted, so that there are no more frequency levels left, the method terminates.

It is not required herein to necessary transmit all component images at a given frequency level across in one single set or package. Transmission may be done in multiple sets. Preferably however, transmitting component images from a higher f-level commences only once all component images from the earlier f-level have been so transmitted for reconstruction. It also not necessary herein to use components at a given f-level for all projection directions. Some may be skipped in an optional angular sampling.

In some embodiments there is an optional step S630, where a dedicated compression algorithm is applied to the component images as received from step S620. However, this is optional and in some cases the analyzing operation S620 itself may be sufficient to save band width and gain accelerated/early reconstruction/visualization of an earlier version of the volume when transmitting such frequency component imagery in progression starting from low frequency components as described at step S640.

Reference is now made to Figure 7 which shows processing steps at the receiver side where reconstruction occurs, such as in a cloud setting on one or more servers, remote from the imager where projection data acquisition took place.

At step S710 one, or better two or more, component images at a given frequency level as produced for example by a method according to Figure 6 is/are received.

At step S720 an optional decompression operation is applied if there was a compression operation in Figure 6 at step S630.

At step S730 a reconstruction algorithm is used to reconstruct the so received component images into a first version of the reconstructed image that corresponds to projection data up to and including the current spatial frequency level.

At step S750, after one or more iterations of reconstruction based on component images up to and including the component images for the current frequency level, the current version of the reconstructed volume may be visualized. Thus, in the first version this reconstruction is based solely on component images for the lowest f-level.

At step S740 it is checked whether new component images at the same level are received. If yes, the above steps are repeated. At step S740 it is also checked whether component images at the next frequency level are received, and, if yes, then the above steps are repeated but this time using the current version of the reconstruction as a new initial image taking now into account the additional higher f-level component images. The newly received component images at next f-level may be merged with earlier received component images from earlier levels. The component images of the same projection direction may be merged with the ones received earlier, to obtain updated, more detailed component images. Once all levels are exhausted, the reconstruction processing terminates, and the current version of the reconstructed volume represents the final result.

Each or some of the versions of the reconstructed imagery may be displayed in a graphics display, and this is updated by morphing or in a stepped fashion, once the next version is available.

Thus, in the above reconstruction, the current version of reconstructed imagery may be refined by including more component images at higher frequency levels into the reconstruction process, in combination with the component images at the lower frequency level(s). Preferably the reconstruction starts with the component images at the lowest frequency level and gradually progresses through the frequency levels with a gradually enlarged pool of frequency component images until all frequency component images at substantially all levels are exhausted and included in the reconstruction.

The processing according to Figures 6,7 can be seen overall as a reconstruction operation that is interleaved with the receiving of the component images at different frequency levels, and the including of same into the reconstruction.

The reconstruction operation as applied at step S730 may include exchanging a current reconstruction algorithm for one of another type, depending on the frequency level of the newly received, added, or to be processed component images. For example, reconstruction algorithms such as of the motion-compensation or (table) scatter correction type may be used when component images at lower frequency levels are to be used in the reconstruction, whilst reconstruction algorithms such as those of the jitter correction type may be used when reconstructing based on higher f-level component imagery.

The reconstruction operation with enhanced acceleration may be implemented on a computing system using processors of multi-core design or others that may allow parallelizing the iterative reconstruction operation. GPU's may be used if required.

Whilst in the above, the frequency components were described as an object in spatial domain as a frequency component images, this is not necessarily so in all embodiments. The frequency components may be instead objects in f-domain, and merely describe the filter coefficients or other data from which the frequency component images are recoverable, at least at an agreed level of approximation. Thus, transmitter TX may transmit, instead of such f-component images as described in the above embodiments, the related filter coefficients. In this embodiment, the inverse transform IT may be located at the receiver side SYS-R. The coefficients are sent over the channel CC again as above in the above embodiments in the order of ascending f-levels to which the coefficients relate. The inverse transform IT may thus operate at the receiver side to recover the component images, and the system and method operates or proceeds as described above. Method as per Figure 7 may thus include an additional step of inverse transforming back based in the transferred data to spatial domain to obtain the component images. When transmitting the f-components as objects of f-domain, inverse transformer IT (now part of the receiver side SYSR-R) may inverse transform the coefficients to obtain the spatial representation, and use the reconstruction algorithm in a normal manner. The merging operation in this embodiment includes combining the newly received coefficients (f-components) with the coefficient from an earlier f-level(s), to perform a common inverse transform on the combined set of coefficients to obtain the spatial domain representation.

Alternatively, when transmitting the f-components in f-domain as recovery data, such as the filter coefficients or other such data, reconstruction may be boosted at the receiver side SYS-R, especially when filtered back-projection ("FBP") is used by the reconstructor RECON. Specifically, FBP-type algorithms may start with some pre-weighting in spatial domain and may include a special filter step, by which the projection data is typically Fourier-transformed, filtered (eg, multiplied pixel-wise) and inverse Fourier-transformed. Thus, in embodiments where FBP or similar is used by reconstructor RECON, Fourier transformed f-components transmitted by transmitter side SYS-T may allow skipping at the receiving side SYS-R the Fourier transform of the FBP operation and directly start/continue processing the so filtered data to realize some operational time savings by reconstructor RECON. The skipping of the FBP's Fourier transform may be possible for instance by applying at the transmitter side SYS-T the mentioned pre-weighting before decomposition by decomposer FD.

Whilst X-ray based tomographic imaging is mainly envisaged herein, the above-described principles may be of equal application in other tomographic setups, such as MRI, SPECT/PET, ultrasound (US-CT), optical tomography (such as OCT) or others still. For example, in MRI, the analysis to obtain the frequency components may be done in k-space in a similar way for some or each slice. A similar approach may be used for some SPECT or PET tomographic reconstruction algorithms, in particular of the iterative type.

The components of the facilitator FS may be implemented as one or more software modules, that run on one or more general-purpose processing systems/units such as a workstation associated with the imager IA, and/or, preferably, on one or more servers, in a Cloud setting. This at least partial Cloud setting my serve a group of imagers.

Alternatively, some or all components of the facilitator FS may be arranged in hardware such as a suitably programmed microcontroller or microprocessor, such an FPGA (field-programmable-gate-array) or as a hardwired IC chip, an application specific integrated circuitry (ASIC). In a further embodiment still, the facilitator FS may be implemented in both, partly in software and partly in hardware.

The different components of the facilitator FS may be implemented on a single data processing unit/system. Alternatively, some or more components are implemented on different processing units/systems, possibly remotely arranged from the imager, possibly in a distributed architecture, and connectable in a suitable communication network CC, such as in the mentioned cloud setting and/or in client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope. Such reference signs may be comprised of numbers, of one or more letters, or of any of alphanumeric combination.

## Claims

1. A system (SYS-R) for reconstruction from projection imagery, comprising:
a receiver interface (IN) via which is receivable input data including plural frequency components at a given frequency level from plural frequency levels, the said frequency components previously obtainable based on image analysis of plural projection images acquired by an imaging apparatus (IA), wherein an order in which the frequency components are receivable is from lower to higher frequency levels; and
a reconstructor module (RECON) to implement a reconstruction algorithm configured to reconstruct, based on the plural frequency components at, or up to, the given frequency level, a version of a reconstructed image *(V).*

2. System of claim 1, wherein the reconstructor module (RECON) is configured to update the version into a follow-up version, based on new input data upon receipt of such new input data at the receiver interface, the new input data including at least one new frequency component at a higher frequency level than the given frequency level.

3. System of claim 2, wherein operation of the reconstructor module (RECON) is interleaved with receipt of such new input data.

4. System of any one of the previous claims, wherein the reconstructor module (RECON) is configured to implement for reconstruction of the follow-up version the same or a different reconstruction algorithm.

5. System of any one of the previous claims, including a visualizer (VIZ) configured to render a visualization of the version of the reconstructed image, the visualization transitioning from the version to the follow-up or further one or more versions as the new or subsequent input data is so received.

6. System of any one of the previous claims, wherein the reconstruction module (RECON) is to implement a tomographic reconstruction algorithm.

7. A system (SYS-T) for providing projection imagery for reconstruction, comprising:
an image analyzer (IMZ) configurable to analyze plural projection images acquirable by an imaging apparatus into respective sets of frequency components at varying frequencies levels in the respective sets; and
a transmitter (TX) configurable to transmit, in order from lower to higher frequency level, plural frequency components across the sets at a given frequency level for reconstruction by a reconstructor module (RECON) into a respective version of a reconstructed image.

8. System of claim 7, wherein the image analyzer (IMZ) includes a frequency decomposer (FD) configurable to decompose the plural projection images into base frequencies, and a filter (FL) module to define the various frequency levels based on the base frequencies.

9. System of claim 8, wherein the frequency decomposer (FD) is implementable based on any one of: i) wavelet type transform, ii) Fourier transform, iii) Laplace transform, iv) Gaussian transform.

10. System of any one of the preceding claims, wherein the frequency components are in spatial domain or in frequency domain.

11. An arrangement (IAR) including the system of any one of claims 1-6 and the system of any one of claims 7-10.

12. Method of reconstruction from projection imagery, comprising:
receiving (S710) input data including plural frequency components at a given frequency level from plural frequency levels, the said frequency components previously obtainable based on image analysis of plural projection images acquired by an imaging apparatus (IA), wherein an order in which the frequency components are receivable is from lower to higher frequency levels; and
reconstructing (S730), based on the plural frequency components at, or up to, a given frequency level, a version of a reconstructed image (V).

13. Method of providing projection imagery for reconstruction, comprising:
analyzing (S620) plural projection images acquirable by an imaging apparatus into respective sets of frequency components at varying frequencies levels in the respective sets; and
transmitting (S650), in order from lower to higher frequency level, plural frequency components across the sets at a given frequency level for reconstruction by a reconstructor module (RECON) into a respective version of a reconstructed image.

14. A computer program element, which, when being executed by at least one data processing system (FS), is adapted to cause the at least one data processing system (FS) to perform the method as per claim 12 and/or claim 13.

15. At least one computer readable medium having stored thereon the program element of claim 14.
